# EUROPEAN PATENT SPECIFICATION

(11) **EP 1 590 274 B1**
(45) Date of publication and mention of the grant of the patent: **26.07.2006**
(21) Application number: 03779760.2
(22) Date of filing: 19.12.2003
(51) Int. Cl.: B65G 21/06, B65G 15/62

(54) **CONVEYOR**
FÖRDERBAND
TRANSPORTEUR

(30) Priority: 20.12.2002 DK 200201964
(43) Date of publication of application: 02.11.2005
(73) Proprietor: K.J. Maskinfabriken A/S, 6710 Esbjerg (DK)
(72) Inventor: WINTHER, Klaus, Kjærgaard, DK-6840 Oksbøl (DK)
(74) Representative: Inspicos A/S
(86) International application number: PCT/DK2003/000904
(87) International publication number: WO 2004/056680

(56) References cited:
- WO-A1-02/02440
- DE-A1- 3 922 397
- FR-A1- 2 783 814

## Description

The present invention concerns a conveyor of the kind which includes longitudinal conveyor structures, a motorised drive pulley with toothed external wheels arranged for driving a slat conveyor which is guided by and carried at the sides of slide rails in parallel with the conveyor structures, and means for returning the slat conveyor between the front end of the conveyor and a pulley at the rear end of the conveyor.

Such conveyors are well-known and are used for many purposes, particularly within the food industry, for transporting materials and semi-manufactured products as well as finished products which are either placed directly on the carrier surface of the conveyor or which are placed in plastic boxes or the like during transport.

The requirements for such a conveyor are particularly high within the food industry, where high capacity combined with minimal service, small manufacturing cost, rapid and secure putting into operation, good hygiene conditions and quiet transport are some of the key words. Furthermore, there are requirements to service and cleaning friendliness so that in the shortest possible time it is possible to perform replacement of relevant parts, such as wear part etc. on the conveyor. Besides, there are requirements to hygiene, i.e. the conveyor is designed and adapted in such a way the access to its parts in connection with cleaning is facilitated as much as possible, and furthermore that the conveyor does not include parts that collect dirt.

Such a conveyor is also known from FR-A1-2 783 814, where the frame is built up of two longitudinal conveyor structures that are mutually connected by a number of cross members with circular/rectangular and flat cross-sections. The slide rails of the conveyor are supported by cross members with rectangular cross-section, where the slide rails are disposed in cutouts made for the purpose. The slide rails are furthermore secured in their position by through-going cross members with circular cross-section which are let in through holes in the structures and welded to the latter. The cross members with rectangular cross-sections furthermore includes slotted apertures in the lower half through which the conveyor belt is returned, supported by a number of slide members with upward facing, convex shape. With regard to cleaning friendliness and hygienic conditions, the frame for the said conveyor can be made of e.g. polypropylene. On the face of it, the conveyor disclosed in FR-A1-2 873 814 seems to be very suitable for application in the food industry, but some problems are unsolved when considering its structural design.

If e.g. the support of the slide rails of the conveyor are considered, where the rails are provided by embedding these in cutouts in the cross members with a rectangular cross-section, it appears that the slide rails are secured in their positions by through-going cross-members with circular cross-section that are passed through holes in the longitudinal conveyor structures and welded to the latter. This construction has been chosen to ensure that the slide rails are not displaced forward to the pulley and become wedged between the segmented conveyor belt and the pulley, a situation that would be destructive for the conveyor. The way of construction is well-known and serves its purpose, however, it is a hindrance for quick replacement and servicing of the slide rails of the conveyor which only can be replaced by removing the through-going cross-members with circular cross-section that are welded to the conveyor structures. Replacement of the slide rails, which is to be expected to be necessary at regular intervals, will thus require use of flame cutters and welding equipment for temporary removal and re-establishment of the said cross members, which is a time and resource demanding operation.

Furthermore, relatively large contact surfaces exist between the rectangular cross-sections of the cross members and the slide rails for the conveyor belt, the contact surfaces being even very difficult to clean sufficiently in order that hygienic requirements can be met.

Other prior art conveyors also include a relatively great number of bolted parts, the contact surfaces of which are obvious places for collecting dirt and bacteria, and therefore it is desirable to reduce the number of said joints to a minimum.

It is the purpose of the invention to provide a conveyor of the kind indicated, better meeting the requirements for easy and rapid servicing and replacement of the slide rails of the conveyor, and which also meets the requirements within the food industry regarding cleaning friendliness, and thus hygiene requirements.

This purpose is achieved by a conveyor of the kind indicated in the introduction, which is peculiar in that the longitudinal conveyor structures are mutually connected with uniform, parallel, interspaced, laminar cross members that are largely evenly distributed along the entire course of the conveyor structures, the cross members including symmetrically disposed cutouts with laterally reversed profiles at a bearing side of the conveyor for receiving profiled slide rails engaging the cutouts by inserting the slide rails from the rear end of the conveyor and against a stop disposed at or near the cross member which is disposed closest to the motorised drive pulley.

Hereby is achieved a conveyor with wear parts, namely the slide rails upon which the slat conveyor is sliding, driven by the motorised drive pulley, while supporting the load placed upon the carrier surface of the conveyor, become very easy to replace without using cutting and welding tools. After removing the pulley and the slat conveyor, a replacement can be performed simply by exerting a rearwards pull in the profiled slide rails, which are hereby pulled out of the profiled cutouts in the laminar cross members. Furthermore, the use of laminar profiled cross member results in the area of the contact surfaces between the slide rails of the conveyor and the laminar cross members is reduced considerably in relation to the prior art conveyors, whereby greater cleaning friendliness and corresponding improvement of the hygiene is achieved. The slide rails of the conveyor are furthermore held fixed in their position in abutment with the stops disposed at or near the cross member closest to the motorised drive pulley sot that the slide rails are not carried with the slat conveyor and become wedged between this and the pulley.

By further designing the profiled cutouts in the cross members for slide rails as undercut, it is also achieved that the slide rails are secured in the cutouts from moving caused by upwards directed forces, which e.g. can arise at heavy loads at the ends of the conveyor belt.

The slat conveyor typically includes guide means for the returning section of the slat conveyor between front and rear ends of the conveyor. These guide means are typically constituted by idlers provided with a certain spacing along the length of the conveyor between front end and rear end. The said idlers are, however, relatively costly and time consuming to mount and service, why it is desirable to substitute the idlers with alternative guide means.

By the invention it has been realised that the supporting guide means advantageously can be constituted by brackets that each include an upwards facing, convex carrier surface which is unilaterally bordered by a vertical guide surface, where the guide surfaces are facing and are disposed laterally reversed in relation to a vertical plane of symmetry of the conveyor. The said guide means for the returning part of the slat conveyor are thus making the hitherto used idlers superfluous, and the guide means will be readily mounted in symmetrical, interspaced cutouts for the lower section of the conveyor.

Particularly within the food industry, the hygienic conditions are very important, and with the purpose of fulfilling requirements according to the guidelines for the food industry termed HACCP, the conveyor structures can be constituted by two open, interspaced, parallel sections that each have a largely flat web including at least one plane section, where each section is provided with a pair of diverging, lateral flanges, and where the pairs of flanges are oriented towards each other. Hereby is achieved that no horizontal surfaces appear on the structures, giving rise to collection of spilled raw material or dirt.

In a particularly preferred embodiment of the conveyor according to the invention, the flanges of the sections have an inclination angle relative to the horizontal between 30° and 160°. Hereby is achieved that the outwards sloping flanges on the sections that constitute the conveyor structures are meeting the requirement that they are to have a slope greater than 30° relative to a horizontal plane. According to HACCP, a slope greater than or equal to 30° provides for the flange being drainable.

The said design of the conveyor furthermore implies that the laminar cross members are becoming a substantial part of the structure of the conveyor, including a substantial part of its carrying capacity. In that connection it may furthermore be mentioned, that the laminar cross members are fastened to the profiled conveyor structures by means of cup head bolts. The rounded heads of the cup head bolts further are providing that dirt is not collected in connection with these joints.

The said conveyors also include cables for power supply to the drive motor and possibly existing control and signal cables. With the purpose of suspending these in a suitable way, the conveyor may be adapted so that the cross members include further profiled cutouts for insertion of carrier means for cables from the front or rear ends of the conveyor. Hereby is achieved that the cables are carried in a safe way, and furthermore it will be possible to use closed cable trays for carrying the said cables, whereby dirtying thereof from raw materials or commonly occurring dirt is avoided.

In case the said conveyor is used for transporting trays, the conveyor may furthermore include guide rails disposed in parallel with the sides of the slat conveyor, the guide rails being securing in support holders that are secured to the inclining flanges on the sections constituting the conveyor structures. Hereby is achieved that the trays transported on the slat conveyor do not fall off the conveyor during transport.

The invention is explained in the following with reference to the drawing in which:
- Fig. 1: is a perspective view of a conveyor according to the invention;
- Fig. 2: is a detail of the front end of the conveyor shown in Fig. 1;
- Fig. 3: is a detail of the rear end of the conveyor of Fig. 1, seen from above;
- Fig. 4: is a detail perspective view of the front end of the conveyor, seen from below; and
- Fig. 5: is a detail perspective view of the rear end of the conveyor of Fig. 1, seen from below.

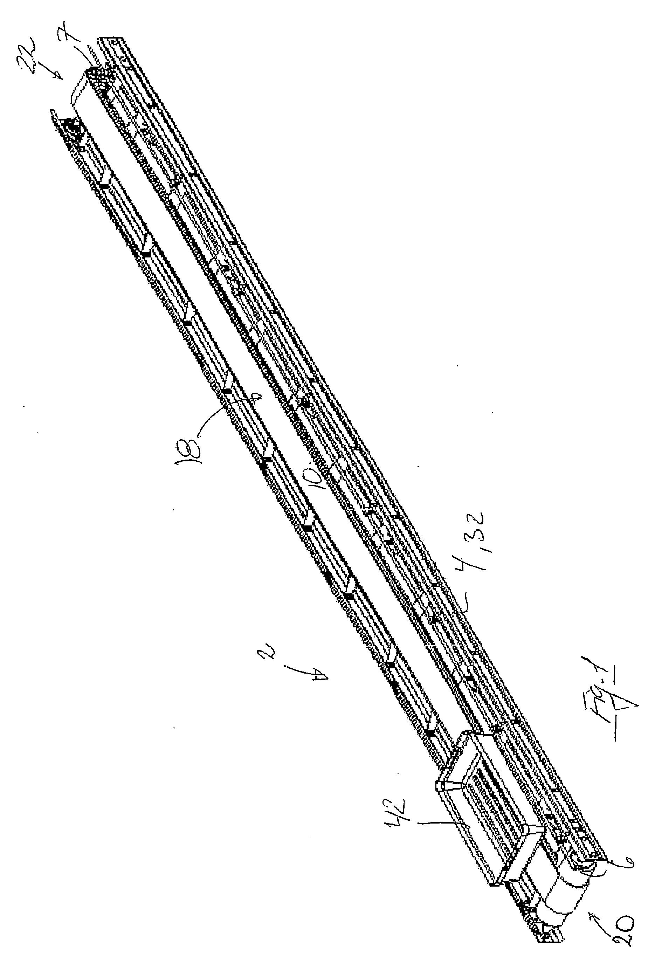

Fig. 1 shows a slat conveyor 2 according to the invention in perspective viewed from above. The slat conveyor includes longitudinal, parallel conveyor structures 4, a motorised drive pulley 6 disposed at the front end 20 of the conveyor for driving a slat conveyor 10 and pulleys 7 disposed the rear end 22 of the conveyor. On the carrier surface 18 of the conveyor provided by the slat conveyor 10 there is provided a load 42 in the form of a box.

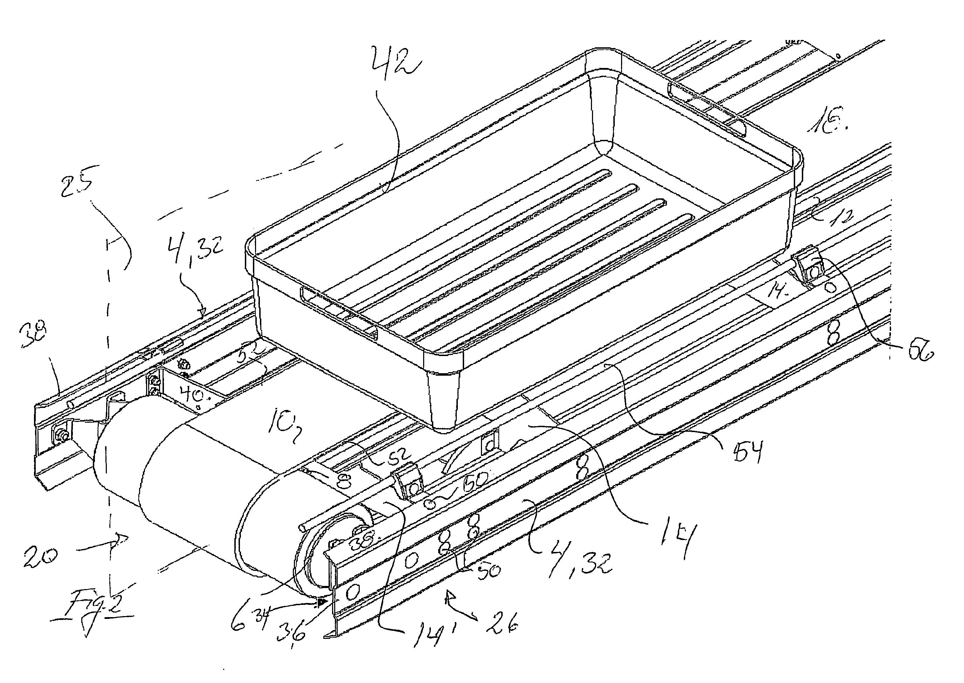

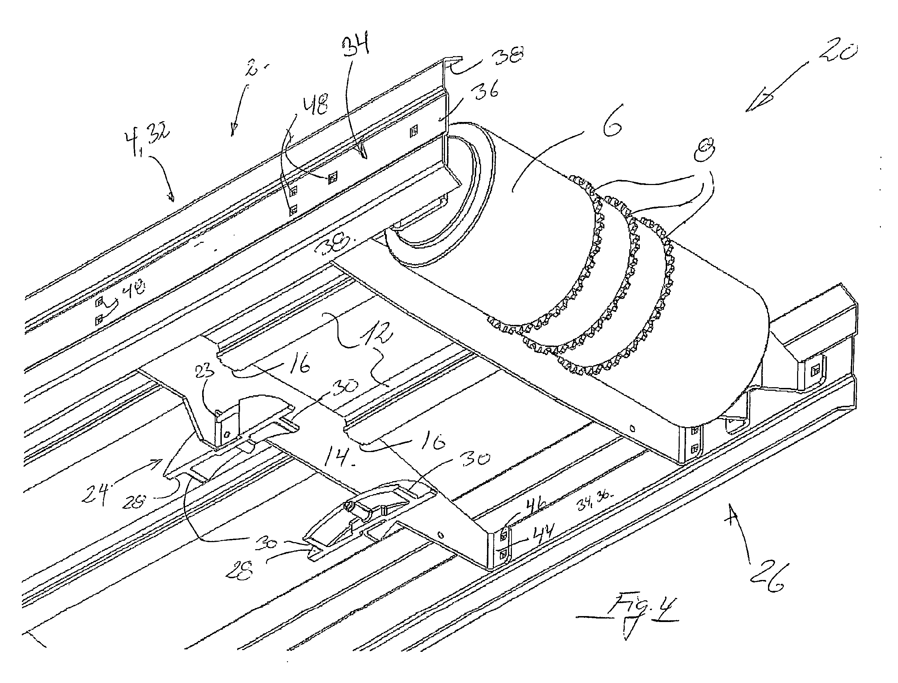

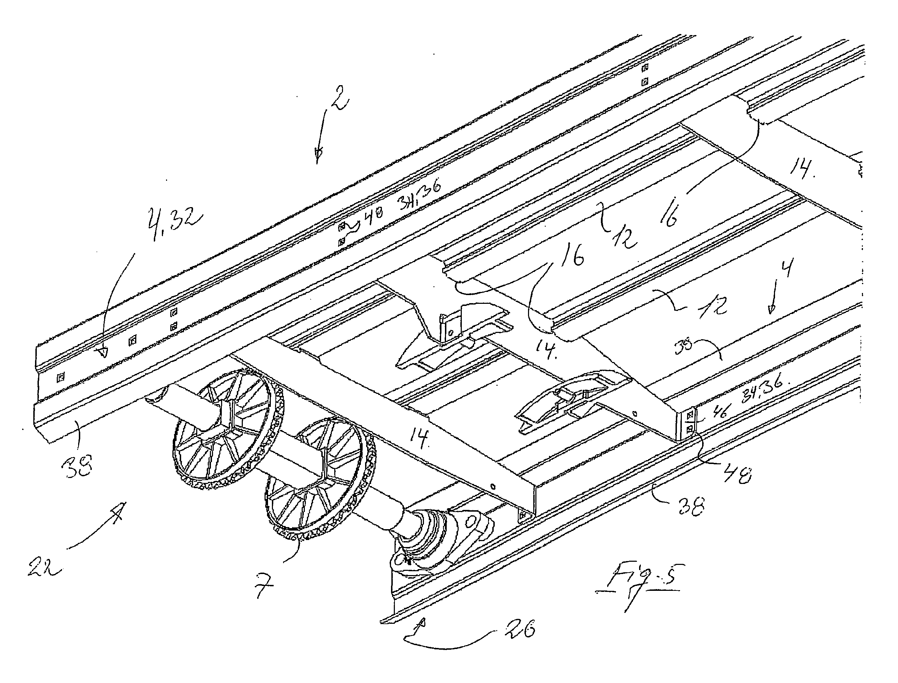

Fig. 2, which shows details of the front end 20 of the conveyor according to the invention, shows that the structures 4 are made up of edgewise positioned sections 32 with flanges 38 in pairs oriented towards the vertical plane 25 of symmetry of the conveyor, the flanges 38 in each pair sloping away from each other and extending away from the web 34 of the sections 32. The structures 4 are mutually connected by laminar cross members 14 that include profiled cutouts 16, cf. Figs. 4 and 5, in which are inserted slide rails 12 running in parallel and having a cross-sectional profile corresponding to and shaped for engaging the profiled cutouts 16 in the cross members 14. The parallel slide rails 12 are constituting support for the slat conveyor 10 and thereby for the carrier surface 18 of the conveyor. In order to counteract inadvertent displacement of the slide rails 12 in the cutouts 16 during operation of the conveyor, the cross member 14' closest to the motorised drive pulley includes an end stop 40 against which the ends of the slide rails 12 are abutting.

As it appears , the diverging, sloping flanges 38 on the edgewise placed sections 32 have an inclination which in the preferred embodiment is greater than or equal to 30° relative to a horizontal plane.

Appearing from Figs. 4 and 5, the laminar cross members 14 include angular bends 44 provided with through-going holes 46 opposite corresponding holes 48 in the bottom or web 34 of the edgewise place sections 32. As fastening means between the cross members 14 and the web 34 of the sections 32 are used cup head bolts 50, with the heads oriented towards the outer sides of the conveyor. As it further appears, a centre section of the web 34 in the edgewise placed sections 32 is displaced in parallel in relation to the remaining part of the web profile. Hereby is achieved that holes for the bolts 50 are protected against dirt by the cup heads, an effect which enhanced by the heads being recessed by the displacement of the centre of the web 34 in relation to other sections of the web 34 facing outwards.

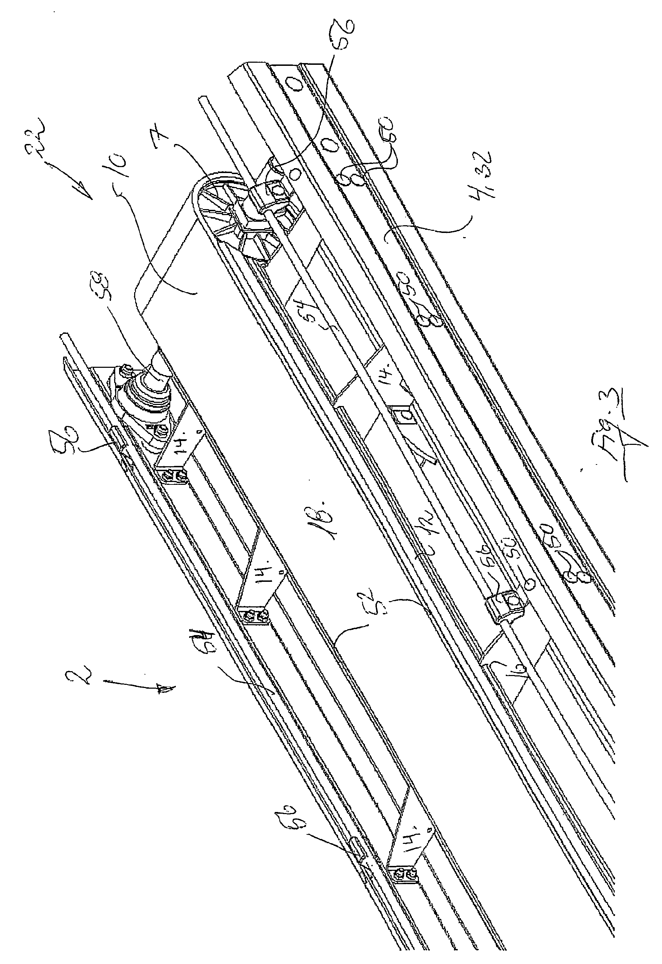

As it furthermore appears from Figs. 2 and 3, the conveyor 2 includes guide rods 54 that are running in parallel with the sides 52 of the slat conveyor, the guide rods 54 being secured in support holders 56 that in turn are fastened to the upper flanges 38 of the sections 32 by means of cup head bolts 50. The rounded heads of the bolts 50 are here disposed at the outer side of the flange 4, also with the purpose of protecting the holes and bolts against dirtying.

In Fig. 3, which is a perspective view from above of the embodiment of the conveyor 2 according to the invention, the pulley 7 is suspended by an axle 58 in bearings.

Fig. 4 is a perspective view of the conveyor 2 in Fig. 1, being viewed obliquely from below and shows clearly the profiled cutouts 16 in the laminar cross members 14 that connect the conveyor structures 4. As it further appears, the parallel extending slide rails 12 have a cross-section corresponding with the profiled cutouts 16, and the slide rails are inserted in the cutouts from one end of the conveyor. As it further appears from Fig. 4, the laminar cross members and cutouts 23 include supporting guide means 24 for the returning, lower section of the slot conveyor 10. The supporting guide means 24 are constituted by brackets 24 that each includes an upwards facing, convex carrier surface 30 bordered at one side by a vertical guide member having a guide surface 28. Guide surfaces 28 located at opposite sides of the conveyor are facing each other and are disposed laterally reversed in relation to the vertical plane 25 of symmetry of the conveyor. The brackets 24 may thus carry and guide the lower, returning section of the slot conveyor 10 from the motorised drive pulley 6 to the pulley at the rear end 22 of the conveyor.

Fig. 5 shows in a corresponding way the design of the rear end of the conveyor as seen from below. The profiled slide rails 12 are seen to engage the undercut cutouts 16 in the laminar cross members 14, whereby the slide rails are secured against upwards displacement towards the carrier surface 18 of the conveyor.

It is thus here indicated a conveyor which is very serviceable and which has wear parts, particularly the parallel slide rails 12, that may readily replaced by simply removing the slat conveyor from the slide rails 12 and dismounting the pulley, then pulling the slide rails rearwards while sliding in the profiled cutouts 16 in the laminar cross members 14. The conveyor 2 according to the invention is furthermore advantageous by the outwards sloping flanges 38 which have sufficient inclination for being drainable, thereby meeting the requirements of the standard HACCP.

### List of Reference Numbers

- 2: conveyor
- 4: conveyor structures
- 6: motorised drive pulley
- 7: pulley
- 8: toothed wheel
- 10: slat conveyor
- 12: slide rails running in parallel
- 14: laminar cross members
- 16: profiled cutouts in 14
- 18: carrier surface of conveyor
- 20: front end of conveyor
- 22: rear end of conveyor
- 23: spaced cutouts for supporting guide means
- 24: supporting guide means
- 25: vertical plane of symmetry of conveyor
- 26: underside of conveyor
- 28: side of supporting guide means facing plane of symmetry 25
- 30: recess
- 32: edgewise placed sections
- 34: web of sections 32
- 36: flat part of web 34
- 38: diverging flanges of section 32
- 40: stop at front end of conveyor
- 42: load on carrier surface 18 of conveyor
- 44: angular bend on 14
- 46: holes in 44
- 48: holes in 34
- 50: cup head bolt 52 sides of slot conveyor 10
- 54: guide rods
- 56: support holders for guide rods 54

## Claims

1. Conveyor including longitudinal conveyor structures (4); a motorised drive pulley (6) with toothed external wheels (8) arranged for driving a slat conveyor (10) which is guided by and carried at the sides of slide rails in parallel with the conveyor structures (4); and means (24) for returning the slat conveyor (10) between the front end (3) of the conveyor and a pulley (7) at the rear end (5) of the conveyor, **characterised in that** the longitudinal conveyor structures (4) are mutually connected with uniform, parallel, interspaced, laminar cross members (14) that are largely evenly distributed along the entire course of the conveyor structures (4), the cross members including symmetrically disposed cutouts (16) with laterally reversed profiles at a bearing side (18) of the conveyor for receiving profiled slide rails (12) engaging the cutouts (16) by inserting the slide rails (12) from the rear end (22) of the conveyor and against a stop (40) disposed at or near the cross member (14') disposed closest to the motorised drive pulley (6).

2. Conveyor according to claim 1, **characterised in that** the profiled cutouts (16) in the cross members (14) are undercut.

3. Conveyor according to claim 1 or 2, **characterised in that** the cross members (14) further includes symmetrically placed, interspaced attachments (23) for supporting guide means (24) for the slat conveyor (10) at the underside (26) of the conveyor, the supporting guide means constituted by brackets (24) that each include an upwards facing, convex carrier surface (30) which is unilaterally bordered by a vertical guide surface (28), where the guide surfaces (28) are facing and are disposed laterally reversed in relation to a vertical plane (25) of symmetry of the conveyor.

4. Conveyor according to any of claims 1 - 3, **characterised in that** the conveyor structures (4) are constituted by two open, interspaced, parallel sections (32) that each have a largely flat web (34) including at least one plane section (36), where each section (32) is provided with a pair of diverging, lateral flanges (38), and where the pairs of flanges (38) are oriented towards each other.

5. Conveyor according to claim 4, **characterised in that** the flanges (38) of the sections have an inclination angle relative to the horizontal of at least 30°.

6. Conveyor according to any of claims 1 - 5, **characterised in that** the cross members (14) include further profiled cutouts for insertion of carrier means for cables from the front or rear ends (20 or 22) of the conveyor.

## Patentansprüche

1. Förderband mit längsverlaufenden Förderbandaufbauten (4); einer motorbetriebenen Antriebsriemenscheibe (6) mit Außenzahnrädern (8), die zum Antreiben eines Scharnierbandförderers (10) angeordnet sind, der an den Seiten von Gleitschienen parallel mit den Förderbandaufbauten (4) geführt und gehaltert ist; und Einrichtungen (24), um den Scharnierbandförderer (10) zwischen dem vorderen Ende (3) des Förderbands und einer Riemenscheibe (7) am hinteren Ende (5) des Förderbands umkehren zu lassen,
**dadurch gekennzeichnet, dass**
die längsverlaufenden Förderbandaufbauten (4) gegenseitig mit gleichförmigen, parallelen, voneinander beabstandeten, lamellenförmigen Querteilen (14) verbunden sind, die im Wesentlichen gleichmäßig entlang des gesamten Verlaufs der Förderbandaufbauten (4) verteilt sind, wobei die Querteile symmetrisch angeordnete Ausschnitte (16) mit seitenverkehrten Profilen an einer Lagerseite (18) des Förderbands umfassen, um in die Ausschnitte (16) eingreifende Profilgleitschienen (12) aufzunehmen, indem die Gleitschienen (12) vom hinteren Ende (22) des Förderbands her und bis zu einem Anschlag (40) eingesteckt sind, der am oder nahe an dem Querteil (14') angeordnet ist, das sich der motorbetriebenen Antriebsriemenscheibe (6) am nächsten befindet.

2. Förderband nach Anspruch 1, **dadurch gekennzeichnet, dass** die Profilausschnitte (16) in den Querteilen (14) unterschnitten sind.

3. Förderband nach Anspruch 1 oder 2, **dadurch gekennzeichnet, dass** die Querteile (14) darüber hinaus symmetrisch gesetzte, voneinander beabstandete Befestigungen (23) für Stützführungseinrichtungen (24) für den Scharnierbandförderer (10) an der Unterseite (26) des Förderbands umfassen, wobei die Stützführungseinrichtungen durch Bügel (24) gebildet sind, die jeweils eine nach oben gewandte, konvexe Auflagefläche (30) umfassen, die einseitig durch eine vertikale Führungsfläche (28) eingegrenzt ist, wobei die Führungsflächen (28) einander in Bezug auf eine vertikale Symmetrieebene (25) des Förderbands zugewandt und seitenverkehrt angeordnet sind.

4. Förderband nach einem der Ansprüche 1 bis 3, **dadurch gekennzeichnet, dass** die Förderbandaufbauten (4) durch zwei offene, voneinander beabstandete, parallele Abschnitte (32) gebildet sind, die jeweils eine im Wesentlichen flache Bahn (34) mit mindestens einem planen Abschnitt (36) umfassen, an dem jeder Abschnitt (32) mit einem Paar auseinandergehender Seitenflansche (38) versehen ist, und an dem die Paare der Flansche (38) einander zugewandt sind.

5. Förderband nach Anspruch 4, **dadurch gekennzeichnet, dass** die Flansche (38) der Abschnitte einen Neigungswinkel bezüglich der Horizontalen von mindestens 30° haben.

6. Förderband nach einem der Ansprüche 1 bis 5, **dadurch gekennzeichnet, dass** die Querteile (14) weitere Profilausschnitte umfassen, um Trägereinrichtungen für Kabel vom vorderen oder hinteren Ende (20 bzw. 22) des Förderbands her einzustecken.

## Revendications

1. Transporteur comprenant des structures longitudinales de transporteurs (4), une poulie d'entraînement motorisée (6) avec des roues externes dentées (8) agencées de manière à entraîner un transporteur à tablier (10) qui est guidé par et porté au niveau des côtés de glissières en parallèle avec les structures de transporteurs (4), ainsi que des moyens (24) destinés à retourner le transporteur à tablier (10) entre l'extrémité avant (3) du transporteur et une poulie (7) au niveau de l'extrémité arrière (5) du transporteur, **caractérisé en ce que** les structures longitudinales de transporteurs (4) sont reliées les unes aux autres par des éléments transversaux (14) uniformes, parallèles, espacés les uns des autres et laminaires qui sont répartis de manière largement régulière sur toute la longueur des structures de transporteurs (4), les éléments transversaux comprenant des entailles (16) disposées de manière symétrique avec des profils inversés au niveau d'un côté d'appui (18) du transporteur afin de recevoir des glissières profilées (12) venant en prise avec les entailles (16) en insérant les glissières (12) à partir de l'extrémité arrière (22) du transporteur et contre une butée (40) disposée au niveau ou à proximité de l'élément transversal (14') disposé le plus près de la poulie d'entraînement motorisée (6).

2. Transporteur selon la revendication 1, **caractérisé en ce que** les entailles profilées (16) dans les éléments transversaux (14) sont découpées.

3. Transporteur selon la revendication 1 ou la revendication 2, **caractérisé en ce que** les éléments transversaux (14) comprennent en outre des fixations (23) espacées les unes des autres et placées de manière symétrique afin de supporter les moyens de guidage (24) pour le transporteur à tablier (10) au niveau de la face inférieure (26) du transporteur, les moyens de guidage et de support se composant de supports (24) qui comprennent chacun une surface d'appui (30) convexe orientée vers le haut qui est délimitée de manière unilatérale par une surface de guidage verticale (28), dans lequel les surfaces de guidage (28) se font face et sont disposées de manière inversée latéralement par rapport à un plan vertical (25) de symétrie du transporteur.

4. Transporteur selon l'une quelconque des revendications 1 à 3, **caractérisé en ce que** les structures de transporteurs (4) se composent de deux profilés ouverts parallèles (32) espacés l'une de l'autre qui comportent chacun une âme largement plate (34) comprenant au moins une section plane (36), dans lequel chaque profilé (32) est muni d'une paire de rebords latéraux divergents (38), et dans lequel les paires de rebords (38) sont orientées l'une vers l'autre.

5. Transporteur selon la revendication 4, **caractérisé en ce que** les rebords (38) des profilés présentent un angle d'inclinaison d'au moins 30° par rapport à l'horizontal.

6. Transporteur selon l'une quelconque des revendications 1 à 5, **caractérisé en ce que** les éléments transversaux (14) comprennent en outre des découpes profilées pour l'insertion de moyens porteurs pour des câbles à partir des extrémités avant ou arrière (20 ou 22) du transporteur.
